# EUROPEAN PATENT APPLICATION

(11) **EP 2 033 756 A1**
(43) Date of publication of application: **11.03.2009**
(21) Application number: 07115730.9
(22) Date of filing: 05.09.2007
(51) Int. Cl.: B29C 33/00

(54) **A process for preparing a moulded product**

(71) Applicant: Nederlandse Organisatie voor Toegepast- Natuurwetenschappelijk Onderzoek TNO, 2628 VK Delft (NL)
(72) Inventor: Tacken, Roland Anthony, 5663 SH Geldrop (NL); de Zwart, Renatus Marius, 5655 JP Eindhoven (NL); Hovestad, Arjan, 5231 PK 's-Hertogenbosch (NL)
(74) Representative: Hatzmann, Martin

(57) **Abstract**

The invention provides a process for preparing a moulded product on which a layer of a metal or alloy thereof is applied, in which process use is made of a mould, which process comprises a moulding step and a metallizing step, wherein the moulding and metallizing step are both carried out in the mould. The invention further relates to a device comprising the moulded product obtained by said process.

## Description

The present invention relates to a process for preparing a moulded product on which a layer of a metal or alloy thereof is applied, and to a device comprising a moulded product as prepared with said process.

It is known in the art to provide the surface of a moulded product with a metallic pattern. Such moulded products can be prepared by subjecting a product obtained from a moulding process to a metallizing step in the form of a wet, electrochemical process, whereby a metallic pattern is produced on the surface of the moulded product. Obviously, such a sequence of process steps is not very attractive in mass production applications where speed and costs play important roles.

Object of the present invention is to provide an improved process for preparing moulded products having a metallic pattern on their surfaces.

Surprisingly, it has been found that this can be realized by carrying both the moulding step and the metallizing step both in one and the same mould.

Accordingly, the present invention relates to a process for preparing a moulded product on which a layer of a metal, an alloy thereof or a metal compound is applied, in which process use is made of a mould, which process comprises a moulding step and a metallizing step, wherein the moulding and metallizing step are both carried out in the mould.

The process according to the present invention is more attractive than the known process since it allows the production of moulded products with a metallic pattern at a higher speed and at less cost.

In one embodiment of the present invention, first the moulding step is carried out in the mould and subsequently the moulded product so obtained is subjected to the metallizing step in the mould.

In the metallizing step suitably use is made of an electroless plating process. In an electroless plating process use is made of the principle that a metal which is available in ionic form in solution can be reduced by a reducing agent into its metallic form on a suitable surface. Moreover, the metal itself should also be catalytic to the reduction reaction, rendering the process autocatalytic as such. For a general description on electroless plating processes reference can, for instance, be made to Electroless Plating Fundamentals & Applications, edited by Glenn O. Mallory and Juan B. Hajdu, New York (1990*).*

In other suitable embodiments of the present invention use is made of metal pasta, i.e. a pasta comprising metal particles and a binder material, or a conductive paint or ink.

Preferably, use is made in the metallizing step of an electroless plating process.

In a suitable metallizing step according to the present invention, an electroless solution which comprises metal ions and a reducing agent for reducing the metal ions into the metal or alloy is contacted with the moulded product, whereby at least the surface of the moulded product is heated to a temperature (T1) which is higher than the temperature (T2) of the solution. In such an embodiment, T1 can suitable range between 50-200°C, and T2 can suitably range between 15-90°C.

Hence, preferably in the metallizing step use is made of a solution that comprises metal ions and a reducing agent for reducing the metal ions into the metal, enabling the metal to be deposited at the surface of the product to be prepared.

In another embodiment of the present invention, first the solution which comprises the metal ions and the reducing agent is introduced into the mould, and subsequently the material from which the moulded product is to be prepared is introduced into the mould.

It will be appreciated that in such an embodiment the moulded product is at least partly released from the inner wall of the mould, allowing the solution comprising the metal ions and the reducing agent to flow between at least part of the moulded product and the inner wall of the mould.

In order to allow a particular metallic pattern to be deposited on at least part of the surface of the mould, the solution comprising the metal ions and reducing agent put in contact with particular parts of the surface of the moulded products by way of a variety of cavities of the mould. In this way a variety of metallic patterns can be realized. Such techniques are as such well known in the art of multi-component moulding.

The material from which the moulded product is made can be selected from thermoplast, thermoset and ceramic materials. Preferably, the material from which the moulded product is made comprises a thermoplast material. Suitable examples of thermoplast materials include liquid crystal polymer (LCP), polyamide (PA6, PA6,6, PA4,6, or PA12), poly(phenylene sulphide) (PPS), polyethyleneimine (PEI), polybutylene terephthalate (PBT), syndiotactic polystyrene (SPS), polycarbonate (PC), acrylonitrile-butadiene-styrene (ABS), PC/ABS, polypropylene (PP), and polyethylene (PE). Preferably, the thermoplast material comprises LCP, polyamide, PEI, ABS or PC/ABS.

Suitable examples of thermoset materials include epoxies, melamine, bakelite, and polyester. Suitable examples of ceramic materials include alumina, zirconia, silica, and glass.

The metal or the alloy to be applied on the moulded product can suitably be selected from the group consisting of copper, nickel, tin, silver, gold, or any alloy thereof, and nickel-phosphorous and nickel-boron.

Preferably, the metal is copper.

Preferably, the alloy is nickel-phosporous or nickel-boron.

The reducing agent to be used in accordance with the present invention is preferably selected from the group consisting of formaldehyde, hypophosphite, dimethylaminoborane or sodium borohydride. More preferably, the reducing agent is formaldehyde.

The layer of the metal or the alloy to be applied on the moulded product can suitably have a thickness in the range of from 1000 - 10000 nm.

The contact temperature of the surface of the moulded product and the metallizing solution (i.e. the solution comprising the metal ions and the reducing agent) can suitably be in the range from 50 - 150°C.

Suitably, the metallizing solution is preheated to a temperature in the range of from 20 - 80°C.

In accordance with the present invention, the moulding step is carried out for a period of time ranging from 1 second to 1 minute.

Suitably, the metallizing step is carried out for a period of time ranging from 1 second to 30 seconds.

By means of the process according to the present invention, a wide variety of moulded products on which a metallic pattern is applied can be prepared. Suitable examples of such products include, but are not limited to, three-dimensional electric circuits and articles such as bathroom articles, reflectors, jewelry, reflectors, toys or decorative articles.

Further, the present invention also relates to a device comprising a moulded product obtained in accordance with the present process.

Preferably, the present invention also provides an electric device comprising a moulded product as prepared with a process according to the present invention.

## Claims

1. A process for preparing a moulded product on which a layer of a metal or alloy thereof is applied, in which process use is made of a mould, which process comprises a moulding step and a metallizing step, wherein the moulding and metallizing step are both carried out in the mould.

2. A process according to claim 1, wherein first the moulding step is carried out and subsequently the moulded product so obtained is subjected to the metallizing step.

3. A process according to claim 1, wherein in the metallizing step use is made of a solution that comprises metal ions and a reducing agent for reducing the metal ions into the metal, enabling the metal to be deposited at the surface of the product to be prepared.

4. A process according to claim 4, wherein first the solution is introduced into the mould and subsequently the material from which the moulded product is to be prepared is introduced into the mould.

5. A process according to any one of claims 1-4, wherein the material from which the moulded product is made comprises a thermoplast material, a thermoset material or a ceramic material.

6. A process according to claim 5, wherein the thermoplast material is selected from the group consisting of liquid crystal polymer (LCP), polyamide (PA6, PA6,6, PA4,6, or PA12), poly(phenylene sulphide) (PPS), polyethyleneimine (PEI), polybutylene terephthalate (PBT), syndiotactic polystyrene (SPS), polycarbonate (PC), acrylonitrile-butadiene-styrene (ABS), PC/ABS, polypropylene (PP), and polyethylene (PE).

7. A process according to claim 6, wherein the thermoplast material comprises LCP, polyamide, PEI, ABS or PC/ABS.

8. A process according to claim 5, wherein the thermoset material is selected from the group consisting of epoxies, melamine, Bakelite and polyester.

9. A process according to claim 5, wherein the ceramic material is selected from the group consisting of alumina, zirconia, silica and glass.

10. A process according to any one claims 1-9, wherein the metal or alloy is selected from the group consisting of copper, nickel, tin, silver, gold, or any alloy thereof, and nickel phosphorous and nickel boron.

11. A process according to claim 10, wherein the metal is copper.

12. A process according to claim 10, wherein the alloy is nickel-phosporous or nickel-boron.

13. A process according to any one of claims 3-12, wherein the reducing agent is selected from the group consisting of formaldehyde, hypophosphite, dimethylaminoborane or sodium borohydride.

14. A process according to claim 13, wherein the reducing agent is formaldehyde.

15. A process according to any one of claims 1-14, wherein the layer of the metal or alloy thereof has a thickness in the range of from 1000 - 10000 nm.

16. A process according to any one of claims 3-15, wherein the contact temperature of the surface of the moulded product and the metallizing solution is in the range from 50 -150°C.

17. A process according to any one of claims 3-16, wherein the metallizing solution is preheated to a temperature in the range of from 20-80°C.

18. A process according to any one of claims 1-17, wherein the moulding step is carried out for a period of time ranging from 1 second to 1 minute.

19. A process according to any one of claims 1-18, wherein the metallizing step is carried out for a period of time ranging from 1 second to 30 seconds.

20. A device comprising a moulded product as prepared with a process according to any one claims 1-19.

21. A device according to claim 17, which device is an electric device.
